# EUROPEAN PATENT APPLICATION

(11) **EP 4 654 352 A1**
(43) Date of publication of application: **26.11.2025**
(21) Application number: 24771152.6
(22) Date of filing: 11.03.2024
(51) Int. Cl.: H01M 50/24, A62C 35/10, A62C 3/16, A62D 1/00, B29C 45/00, H01M 50/502, H01M 50/204, H01M 50/509, H01M 50/251

(54) **BATTERY PACK WITH IMPROVED SAFETY**

(30) Priority: 15.03.2023 KR 20230033765; 08.03.2024 KR 20240033265
(71) Applicant: LG Energy Solution, Ltd., Seoul 07335 (KR)
(72) Inventor: YUN, Youngwon, Daejeon 34122 (KR); KIM, Kiyoun, Daejeon 34122 (KR); AHN, Jong Kyu, Daejeon 34122 (KR); KIM, Yongmin, Daejeon 34122 (KR); KIM, Youngbum, Daejeon 34122 (KR); CHOI, Dongmin, Daejeon 34122 (KR)
(74) Representative: Plasseraud IP
(86) International application number: PCT/KR2024/003116
(87) International publication number: WO 2024/191153

(57) **Abstract**

A battery pack according to an embodiment of the present disclosure includes: a cell module assembly including a battery cell stack in which a plurality of battery cells are stacked and a busbar housing assembly in which an electrode lead of the battery cell is coupled to a busbar electrode; a pack case in which the cell module assembly is housed and whose upper surface is opened; and a fire extinguishing tank that covers an upper surface of the cell module assembly, wherein the fire extinguishing tank includes: an internal space that houses a fire extinguishing agent; and a plurality of fragile portions that are configured to form the base plate of the fire extinguishing tank to be relatively thin in thickness, and are melted and opened by a thermal event of the battery cell, and wherein a portion of the base plate of the fire extinguishing tank that is located at least above the electrode lead of the battery cell includes a shape that protrudes downward toward the electrode lead of the battery cell.

## Description

### [TECHNICAL FIELD]

### Cross Citation with Related Application(s)

This application claims the benefit of priority to Korean Patent Application No. 10-2023-0033765 filed on March 15, 2023 and Korean Patent Application No. 10-2024-0033265 filed on March 8, 2024, the disclosures of which are incorporated herein by reference in their entirety.

The present disclosure relates to a battery pack, and more specifically, to a battery pack, etc. configured to ensure safety even when a thermal event occurs.

### [BACKGROUND]

Currently commercialized secondary batteries include a nickel cadmium battery, a nickel hydrogen battery, a nickel zinc battery, a lithium secondary battery, and the like. Among them, lithium secondary batteries are in the spotlight because they have almost no memory effect compared to nickel-based secondary batteries, and thus, have advantages of free charge/discharge, very low self-discharge rate, and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and an exterior material, i.e. a battery case, which hermetically houses the electrode assembly together with an electrolyte.

Depending on the shape of the exterior material, generally, a lithium secondary battery may be classified into a can type secondary battery where the electrode assembly is incorporated into a metal can and a pouch type secondary battery where the electrode assembly is incorporated into a pouch of an aluminum laminate sheet.

Such secondary batteries are widely used not only in small-sized devices such as portable electronic devices, but also in medium- and large-sized devices such as electric vehicles and energy storage systems (ESS), and the frequency of the use thereof is rapidly increasing. Moreover, recently, the tendency of using home battery packs for storing electrical power is increasing.

Various battery packs, including such home battery packs, include a plurality of battery cells (secondary batteries) to increase capacity and/or output. In particular, in order to increase the energy density of a battery pack, a plurality of battery cells are often arranged in a dense state in a very narrow space.

One of the most important issues in such a battery pack configuration is safety. In particular, if a thermal event occurs in one of the plurality of battery cells included in the battery pack, it is necessary to suppress propagation of the event to another battery cell. If a thermal propagation between battery cells is not properly suppressed, this may lead to thermal events in multiple battery cells included in the battery pack, which may cause greater problems such as ignition or explosion of the battery pack. Furthermore, the ignition or explosion occurring in a battery pack can cause great damage to human life or property in the surrounding area. In particular, in the case of a home battery pack, if ignition or explosion occurs, it can jeopardize the safety of people living in the house, and may spread to the house fire and cause great damage.

### [DETAILED DESCRIPTION OF THE INVENTION]

### [Technical Problem]

The present disclosure is designed to solve the above problems of the related art, and therefore, an object of the present disclosure is to provide a battery pack having an improved structure that can appropriately control thermal events occurring within the battery pack.

In particular, flames are often discharged at the electrode lead portion of a battery cell during a thermal event, and the present disclosure aims to quickly and effectively extinguish the flames at an early stage.

However, the technical purpose to be solved by embodiments of the present disclosure are not limited to those mentioned above, and other objects not mentioned herein can be clearly understood by those skilled in the art from the following description.

### [Technical Solution]

In order to achieve the above objects, according to one aspect of the present disclosure, there is provided a battery pack comprising: a cell module assembly including one or more battery cells; a pack case that houses the cell module assembly in an internal space; and a fire extinguishing tank that holds a fire extinguishing agent and is disposed on an upper part of the cell module assembly.

Herein, the fire extinguishing tank may be configured to discharge the fire extinguishing agent to the cell module assembly side when heat is applied from the cell module assembly.

The fire extinguishing tank may be configured to be at least partially melted by heat applied from the cell module assembly.

The fire extinguishing tank may be configured to be melted by venting gas ejected from the battery cell or by the temperature of a battery cell.

The fire extinguishing tank may hold a fire extinguishing agent in a liquid state.

The fire extinguishing tank may be configured so that the thickness of the base plate has a difference for each position.

The fire extinguishing tank may be configured such that a fragile portion having a relatively thin thickness is located in a central portion between cells stacked in a horizontal direction.

The pack case may be configured to be stackable in the up and down direction.

In order to achieve the above objects, according to another aspect of the present disclosure, there is provided an energy storage system comprising the battery pack according to the present disclosure.

According to one embodiment of the present disclosure, there is provided a battery pack comprising: a cell module assembly including a battery cell stack in which a plurality of battery cells are stacked and a busbar housing assembly in which an electrode lead of the battery cell is coupled to a busbar electrode; a pack case in which the cell module assembly is housed and whose upper surface is opened; and a fire extinguishing tank that covers an upper surface of the cell module assembly, wherein the fire extinguishing tank includes: an internal space that houses a fire extinguishing agent; and a plurality of fragile portions that are configured for form the base plate of the fire extinguishing tank to be relatively thin in thickness, and are melted and opened by a thermal event of the battery cell, and wherein a portion of the base plate of the fire extinguishing tank that is located at least above the electrode lead of the battery cell includes a shape that protrudes downward toward the electrode lead of the battery cell.

The base plate of the fire extinguishing tank has a step, and the height of the portion located above the electrode lead of the battery cell may be lower than the height of the portion located at least above the busbar housing assembly.

The base plate of the fire extinguishing tank has a step, and the height of the portion located above the electrode lead of the battery cell may be equal to or lower than the height of the portion where the main body of the battery cell is located.

In the base plate of the fire extinguishing tank, a portion located above the electrode lead of the battery cell may be adjacent to the electrode lead.

In the portion located above the electrode lead of the battery cell, a shape that protrudes downward toward the electrode lead of the battery cell may be located on the outer surface of the busbar housing assembly.

The fragile portion has a linear shape, and is arranged in parallel to one edge of the fire extinguishing tank, with each fragile portion being arranged in parallel to each other, and the longitudinal direction of the fragile portion and the longitudinal direction of the battery cell may be orthogonal to each other.

The fragile portion has a linear shape, and is arranged in parallel to one edge of the fire extinguishing tank, with each fragile portion being arranged in parallel to each other, the longitudinal direction of the fragile portion and the longitudinal direction of the battery cell are parallel to each other, and the fragile portion may be disposed between two battery cells adjacent to each other.

The fragile portion may be also provided in a portion that protrudes downward toward the electrode lead of the battery cell among portions located above the electrode lead of the battery cell.

The thickness of the portion that protrudes downward toward the electrode lead of the battery cell among portions located above the electrode lead of the battery cell may be equal to the thickness of the fragile portion.

The fire extinguishing tank may be fabricated by plastic injection molding.

The cell module assembly includes: a pair of end plates disposed in parallel to the battery cells at both side ends of the battery cell stack, wherein the pair of end plates may be connected between the pair of busbar housing assemblies.

The cell module assembly may include straps that respectively connects the upper and lower sides of the pair of end plates of the battery cell stack so as to strengthen binding of the cell module assembly.

The base plate has a step, and the height of the portion where the plurality of fragile portions are disposed may be lower in height from the lower surface of the battery pack than the portion located on the strap.

The fire extinguishing agent may be a fire extinguishing agent in a liquid state.

The battery pack is provided in a plurality of numbers, and the plurality of battery packs may be coupled to each other through mechanical or electrical connection.

The plurality of battery packs can be stacked in an up and down direction.

The electrical connection between the plurality of battery packs is made in series so that the voltage range of the plurality of battery packs can be realized in various ways.

The electrical connection between the plurality of battery packs may be made in parallel so that the storage capacity of the plurality of battery packs can be realized in various ways.

In order to achieve the above objects, according to another aspect of the present disclosure, there is provided an energy storage system comprising one or more battery packs according to the present disclosure.

### [Advantageous Effects]

According to one aspect of the present disclosure, a battery pack with improved safety can be provided.

Particularly, according to one embodiment of the present disclosure, even if a thermal event occurs inside the battery pack, such a thermal event can be quickly controlled.

Moreover, if an issue such as thermal runaway or ignition occurs in some of the battery cells among the plurality of battery cells included in the battery pack, such an issue can be effectively prevented from being transferred to other modules.

Further, according to one aspect of the present disclosure, a battery pack having a simple structure and enhanced thermal safety can be provided, and a new part for injecting a fire extinguishing agent does not need to be added, thereby making it possible to provide a battery pack with excellent manufacturability and economic efficiency.

In particular, according to one embodiment of the present disclosure, flames are often discharged at the electrode lead portion of a battery cell during a thermal event, but these can be extinguished quickly and effectively at an early stage.

Further, according to one aspect of the present disclosure, it is not necessary to design a special waterproof and dustproof structure.

Further, according to one aspect of the present disclosure, products with various voltage ranges and/or storage capacities can be provided by stacking the same type of battery packs in a plurality of numbers.

In addition, according to various embodiments of the present disclosure, various other additional effects may be achieved. Various effects obtainable from the present disclosure will be described in detail in each embodiment, or descriptions of effects that may be easily understood by those skilled in the art will be omitted.

### [BRIEF DESCRIPTION OF THE DRAWINGS]

The accompanying drawings illustrate a preferred embodiment of the present disclosure and, together with the detailed description below, serve to provide further understanding of the technical sprit of the present disclosure, and thus, the present disclosure is not construed as being limited to the drawings.
FIG. 1 is an exploded perspective view schematically showing the configuration of a battery pack according to an embodiment of the present disclosure.
FIG. 2 is a diagram schematically showing the configuration in which a fire extinguishing agent is discharged from the battery pack of FIG. 1.
FIG. 3 is a perspective view schematically showing the configuration of a battery pack according to another embodiment of the present disclosure.
FIG. 4 is a cross-sectional view taken along line A4-A4' in FIG. 3.
FIG. 5 is an exploded perspective view schematically showing the configuration of a battery pack according to another embodiment of the present disclosure.
FIG. 6 is a perspective view of a cell module assembly included in the battery pack of FIG. 5.
FIG. 7 is a perspective view of a blocking member included in the battery pack of FIG. 5.
FIG. 8 is an exploded perspective view of the blocking member of FIG. 7.
FIG. 9 shows a diagram in which the blocking member of FIG. 7 and the battery cell are arranged side by side.
FIG. 10 is a perspective view of a pack case included in the battery pack of FIG. 5.
FIGS. 11 and 12 are diagrams illustrating a case where the cell module assembly of FIG. 10 is housed in a pack case.
FIG. 13 is a perspective view of a fire extinguishing tank included in the battery pack of FIG. 5.
FIG. 14 is a perspective cross-sectional view of the fire extinguishing tank of FIG. 13.
FIG. 15 is a top cross-sectional view of the lower tank of the fire extinguishing tank when viewed from above.
FIG. 16 shows a perspective cross-sectional view as a modified embodiment of the fire extinguishing tank shown in FIGS. 5 to 15.
FIG. 17 is a perspective view of a battery pack in which all of the constituent elements of the battery pack described above with reference to FIGS. 5 to 15 are combined.
FIG. 18 shows a perspective view of the fire extinguishing tank when the fire extinguishing tank of the battery pack of FIGS. 1 to 5 is partially modified.
FIG. 19 is a front view of the fire extinguishing tank of FIG. 18.
FIG. 20 shows a cross-sectional view of the fire extinguishing tank of FIG. 18 when located on the cell module assembly.
FIG. 21 shows a front view of the fire extinguishing tank when the fire extinguishing tank of the battery pack in FIG. 18 is partially modified.
FIG. 22 is a perspective view schematically showing the battery pack of FIGS. 1 to 17.
FIGS. 23 and 24 are diagrams showing embodiments in which different numbers of pack cases shown in FIG. 22 are stacked.

### [DETAILED DESCRIPTION OF THE EMBODIMENTS]

Hereinafter, preferred embodiments of the present disclosure will be described in detail with reference to the accompanying drawings. Prior to description, it should be understood that terms and words used in the specification and the appended claims should not be construed as limited to general and dictionary meanings, but interpreted as having meanings and concepts corresponding to technical aspects of the present disclosure based on the principle that the inventor can properly define the concepts of the terms and words in order to describe his/her own invention as best as possible.

Therefore, embodiments described in the specification and the configurations shown in the drawings are not more than the most preferred embodiments of the present disclosure and do not fully cover the spirit of the present disclosure. Accordingly, it should be understood that there may be various equivalents and modifications that can replace those when this application is filed.

A description of parts that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of some layers and regions are exaggerated for clarity. In the drawings, the thicknesses of some layers and region are exaggerated for convenience of description.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

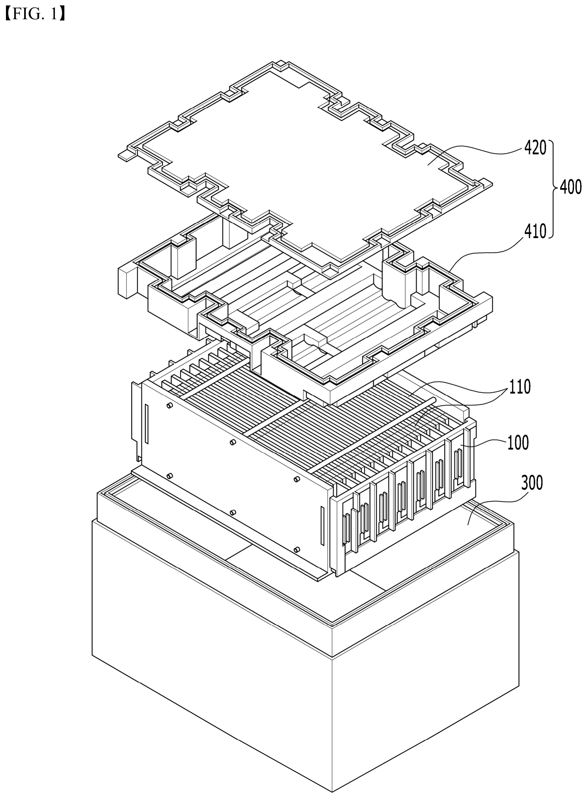

FIG. 1 is an exploded perspective view schematically showing the configuration of a battery pack according to an embodiment of the present disclosure.

Referring to FIG. 1, the battery pack according to the present disclosure includes a cell module assembly 100, a pack case 300, and a fire extinguishing tank 400.

The cell module assembly 100 may include one or more battery cells 110. Here, each battery cell 110 may mean a secondary battery. The secondary battery may include an electrode assembly, an electrolyte, and a battery case. Particularly, the battery cell 110 provided in the cell module assembly 100 may be a pouch type secondary battery. However, other forms of secondary batteries, such as cylindrical batteries or prismatic batteries, may also be employed in the cell module assembly 100 of the present disclosure.

A plurality of secondary batteries may form the cell module assembly 100 in a shape stacked with each other. That is, the battery cell stack can form the cell module assembly 100. For example, the plurality of battery cells 110 may be stacked in such a manner that they are arranged in a horizontal direction (X-axis direction in the figure) while being erected in an up and down direction (Z-axis direction in the figure). Each battery cell 110 may be provided with an electrode lead, wherein the electrode lead may be located at both end parts, or may be located at one end part of each battery cell 110. A secondary battery in which electrode leads protrude in both directions may be called a bidirectional cell, and a secondary battery in which electrode leads protrude in one direction can be called a unidirectional cell. In FIG. 1, a bidirectional cell is illustrated. However, the present disclosure is not limited by a specific type or form of the secondary battery, and various forms of secondary batteries known at the time of filing the present application can be employed in the cell module assembly 100 of the present disclosure.

The pack case 300 may be configured to have an empty space formed therein and house the cell module assembly 100 in the internal space. For example, the pack case 300 may be configured in a box shape as shown in FIG. 1. The box-shaped pack case 300 may be integrally molded, or may be fabricated by coupling at least one surface with an adjacent surface.

The fire extinguishing tank 400 can hold a fire extinguishing agent. Particularly, the fire extinguishing tank 400 is provided with an internal space and can hold a fire extinguishing agent in the internal space. For example, the fire extinguishing tank 400 may comprise a lower tank 410 and an upper cover 420, as shown in FIG. 1. Here, the lower tank 410 is configured in the form of a box having an opened upper part, and can provide a space where a fire extinguishing agent can be held. In addition, the upper cover 420 may be configured to cover the upper opening part of the lower tank 410 and hermetically seal the fire extinguishing agent holding space of the lower tank 410.

The fire extinguishing tank 400 may be housed inside the pack case 300. In particular, the fire extinguishing tank 400 may be arranged on an upper side of the cell module assembly 100 in the internal space of the pack case 300.

According to such an embodiment configuration of the present disclosure, a fire extinguishing agent is discharged from the fire extinguishing tank 400 located on the upper side of the cell module assembly 100, so that the thermal event of the cell module assembly 100 can be more easily controlled. Particularly, the fire extinguishing agent discharged from the fire extinguishing tank 400 can easily move downward by gravity. Therefore, heat or fire suppression of the cell module assembly 100 using a fire extinguishing agent can be performed more easily.

Particularly, when the cell module assembly 100 is provided with a plurality of battery cells 110 arranged side by side in the horizontal direction, that is, in the left and right direction (X-axis direction), as shown in FIG. 1, a fire extinguishing agent can be easily supplied to all the battery cells 110 if the fire extinguishing agent is discharged from the fire extinguishing tank 400 located at the upper part. Therefore, according to such an embodiment configuration, thermal event suppression for the entire cell module assembly 100 can be performed more effectively.

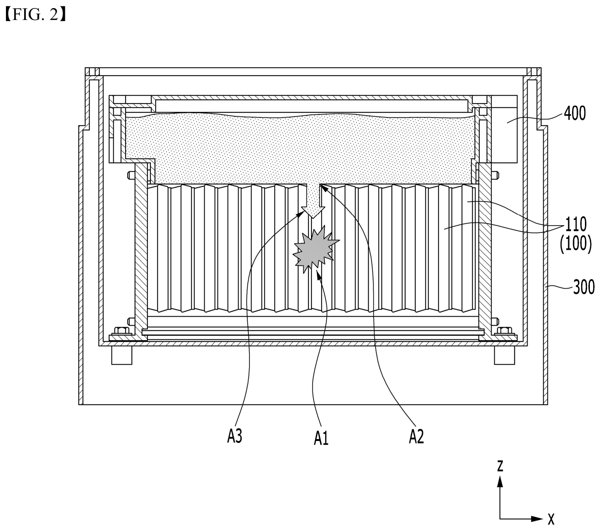

The fire extinguishing tank 400 may be configured to discharge a fire extinguishing agent to the side of the cell module assembly 100 when heat is applied from the cell module assembly 100. This will be described in more detail with reference to FIG. 2.

FIG. 2 is a diagram schematically showing the configuration in which a fire extinguishing agent is discharged from the battery pack of FIG. 1.

Referring to FIG. 2, a fire extinguishing tank 400 is located at the upper part of the cell module assembly 100. A thermal event such as overheating, ignition, or thermal runaway may occur in a specific battery cell 110, like a portion indicated by A1 among a plurality of battery modules stacked in a left and right direction (e.g., the X-axis direction in the figure). In this case, the heat generated in the corresponding battery cell 110 may be applied to the side of the fire extinguishing tank 400, such as a portion indicated by A2 in FIG. 2. Then, the fire extinguishing agent may be discharged from the fire extinguishing tank 400, as indicated by arrow A3.

Particularly, the fire extinguishing tank 400 may be configured to be at least partially melted by heat applied from the cell module assembly 100. For example, in the configuration of FIG. 2, the portion indicated as A2 of the fire extinguishing tank 400 may be melted by heat. Then, through the portion molten in this way, the fire extinguishing agent can be discharged, as indicated by an arrow A3.

For this purpose, the fire extinguishing tank 400 may be constructed of a material that can be at least partially melted by the heat applied from the cell module assembly 100. For example, the fire extinguishing tank 400 may be wholly constructed of a plastic material. In particular, the fire extinguishing tank 400 may be constructed in the form of a plastic injection material.

Further, the fire extinguishing tank 400 can be configured so as to be melted by venting gas or heat ejected from the battery cell 110. For example, when a thermal runaway occurs in the battery cell 110 and venting gas is ejected, the venting gas may be in a high-temperature state of a certain temperature or higher. The fire extinguishing tank 400 may be constructed of a material and/or form that can be melted by the high-temperature venting gas. Alternatively, when a thermal runaway occurs in the battery cell 110, the battery cell 110 may be in a higher temperature than the normal state even if the venting gas is not ejected. The fire extinguishing tank 400 may be constructed of a material and/or form that can be melted by heat applied from the battery cell 110 in such an abnormal high-temperature state.

In particular, the fire extinguishing tank 400 may be configured so that the base plate 411 is melted by a high temperature of heat and/or gas generated in the event of the battery cell 110. In this case, the fire extinguishing agent may flow into the bottom melting section of the fire extinguishing tank 400 and be discharged in a lower direction. Therefore, the fire extinguishing agent can be quickly injected to the side of the cell module assembly 100.

According to such an embodiment configuration of the present disclosure, the fire extinguishing agent is injected in such manner that the injection material melts, thereby effectively suppressing thermal events inside the battery pack, and also minimizing thermal event propagation between battery cells 110.

The fire extinguishing tank 400 may hold a fire extinguishing agent in a liquid state. In this case, the fire extinguishing agent may be referred to as a fire extinguishing liquid. For example, the fire extinguishing tank 400 may hold water or other cooling liquid as a fire extinguishing agent. Further, the fire extinguishing tank 400 can hold antifreeze as a fire extinguishing agent. In particular, when the battery pack is used in a season in which temperature is low, such as winter. or in an area in which temperature is low, such as a polar region, the fire extinguishing tank 400 can hold, as a fire extinguishing agent, an antifreeze liquid which does not easily freeze even at a low temperature. Moreover, in the case of a home battery pack, since it can be located outdoors, the antifreeze liquid can be provided as a fire extinguishing agent.

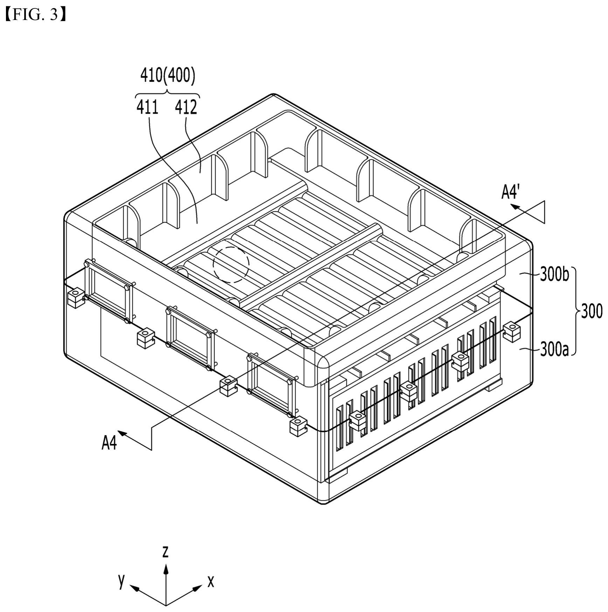

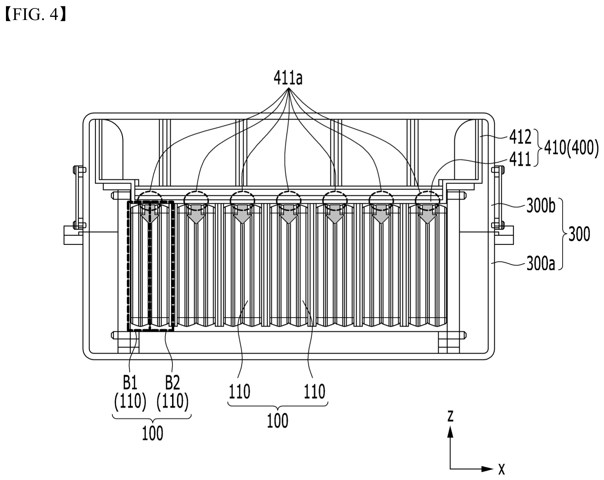

The fire extinguishing tank 400 may be configured so that the thickness of the base plate 411 has a difference for each position. This will be described in more detail with reference to FIGS. 3 and 4.

FIG. 3 is a perspective view schematically showing the configuration of a battery pack according to another embodiment of the present disclosure. However, in FIG., 3, for convenience of explanation, some components are illustrated transparently. FIG. 4 is a cross-sectional view taken along line A4-A4' in FIG. 3. Regarding various embodiments included in this specification, including the present embodiment, detailed descriptions of the portions, in which the portions described in other embodiments can be applied identically or similarly, will be omitted, and the portions where there are differences will be mainly described.

Referring to FIGS. 3 and 4, the fire extinguishing tank 400 may include a base plate 411 and a side wall 412. Here, the side wall 412 may be configured to protrude upward from an edge of the base plate 411. Further, the lower part and the side part of the fire extinguishing tank 400 are defined by the base plate 411 and the side wall 412, thereby forming a space capable of holding the fire extinguishing agent. At this time, the upper part of the fire extinguishing tank 400 may be hermetically sealed by the pack case 300. That is, as shown in FIG. 4, the pack case 300 includes a lower case 300a and an upper case 300b, and the upper part of the fire extinguishing tank 400 is covered by the upper case 300b, so that a fire extinguishing agent can be held inside the fire extinguishing tank 400. Alternatively, the fire extinguishing tank 400 may be configured so as to include an upper cover 420 and hermetically seal the upper part of the fire extinguishing agent holding space, as shown in FIG. 1.

In the configuration of the fire extinguishing tank 400 provided with the base plate 411 in this way, the base plate 411 may be formed to differ in thicknesses for each portion. In particular, the fire extinguishing tank 400 may be configured so that the thickness of certain portions is thin, like the portion indicated by 411a in FIGS. 3 and 4. For example, the base plate 411 of the fire extinguishing tank 400 is constructed in the form of a plastic injection material having a thickness of 1 mm as a whole, wherein the portion indicated by 411a may be configured to have a thickness of 0.5 mm.

In particular, a portion formed to have a thin thickness in the base plate 411 of the fire extinguishing tank 400 may function as a fragile portion 411a. That is, when the temperature rises in the cell module assembly 100, such a fragile portion 411a may be damaged first. Further, if the fragile portion 411a is damaged, the fire extinguishing agent held inside the fire extinguishing tank 400 may be discharged to the side of the cell module assembly 100 via the fragile portion 411a.

The fragile portion 411a may be provided in a plurality of numbers. For example, the fragile portion 411a may have a shape narrow in width and long in length. That is, it has a linear shape and may be arranged in parallel with one edge of the fire extinguishing tank 400, and the fragile portions 411a may be arranged in parallel to each other.

According to the above embodiment configuration, if venting gas, fire or the like occurs due to thermal runaway on the cell module assembly 100 side, a structure for injecting a fire extinguishing agent such as cooling water does not need to be separately provided. Therefore, the configuration for injection the fire extinguishing agent inside the battery pack can be realized with a simple structure. Furthermore, in such a configuration, when an event occurs, the fire extinguishing agent can be discharged through the fragile portion 411a formed in a thin thickness, and thus, the portion where the fire extinguishing agent is discharged can be designated in advance.

In the above embodiment configuration, as shown in FIG. 4, a plurality of fragile portions 411a may be provided in one fire extinguishing tank 400. Moreover, the plurality of fragile portions 411a can be arranged on the base plate 411 of the fire extinguishing tank 400 while being spaced apart by a prescribed distance along the stacking direction of the cell module assembly 100. For example, in the cell module assembly 100, a plurality of battery cells 110 may be stacked in the left and right direction (X-axis direction), and in the base plate 411 of the fire extinguishing tank 400 located at the upper part of the cell module assembly 100, a plurality of fragile portions may also be arranged in the left and right direction while being spaced apart from each other.

Particularly, the fire extinguishing tank 400 may be configured such that the fragile portion 411a having a relatively thin thickness is located in the central portion between cells stacked in the horizontal direction.

For example, in the configuration of FIG. 4, B1 and B2, which are two battery cells 110, are arranged adjacent to each other in the left and right direction in the left side portion of the cell module assembly 100. At this time, the fragile portion 411a located on the leftmost side among several fragile portions 411a may be arranged between B1 and B2 in the left and right direction. That is, the fragile portion 411a may be located at an upper part of B1 and B2 in the up and down direction (Z-axis direction), but may be located between B1 and B2 in the horizontal direction (X-axis direction). Further, the other battery cells 110 except B1 and B2 can also be configured such that for every two adjacent battery cells 110, one fragile portion 411a is located in the space between them in the horizontal direction.

According to such an embodiment configuration of the present disclosure, when a thermal event occurs in a specific battery cell 110 and heat is applied to the fragile portion 411a located at the upper part, the fragile portion 411a may be damaged. And, the fire extinguishing agent is discharged through the damaged fragile portion 411a, and a fire extinguishing agent may flow into a space between adjacent battery cells 110 as indicated by the arrow in FIG. 4.

Therefore, according to such an embodiment configuration, it is possible to more effectively prevent the transmission of thermal events between battery cells 110. Further, according to the embodiment configuration of the present disclosure, it is possible to intensively inject the fire extinguishing agent around the battery cell 110 where a thermal event such as overheating or ignition has occurred, so that more effective cooling and extinguishing operations can be performed. Therefore, according to the above embodiment configuration, when a fire or the like occurs inside the battery, it may be possible to inject a fire extinguishing agent in the right time and the right place without any other parts except the fire extinguishing tank 400.

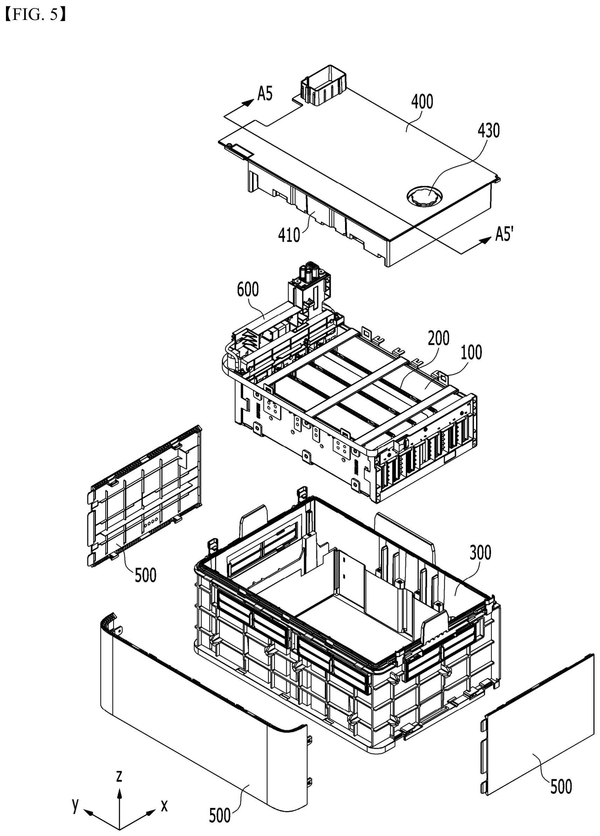

FIG. 5 is an exploded perspective view schematically showing the configuration of a battery pack according to another embodiment of the present disclosure.

Referring to FIG. 5, the battery pack includes a cell module assembly 100, a blocking member 200, a pack case 300, a fire extinguishing tank 400, an outer cover 500, and an electrical connection unit (electrical unit) 600.

Even in the case of FIG. 5, the cell module assembly 100 may be configured such that the plurality of battery cells 110 are stacked in a shape arranged in a horizontal direction (e.g., the X-axis direction in the figure) while being erected in the up and down direction (e.g., the Z-axis direction in the figure). At this time, the longitudinal direction of the battery cell 110 is, for example, the Y-axis direction in the figure.

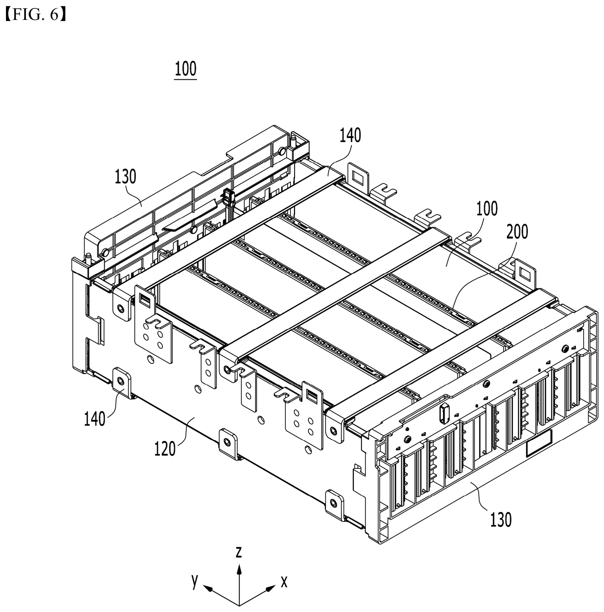

FIG. 6 is a perspective view of a cell module assembly 100 included in the battery pack of FIG. 5.

For reference, in order to more clearly illustrate the components included in the cell module assembly 100, FIG. 6 shows the remaining components excluding the plurality of battery cells 110. The plurality of battery cells 110 may be normal pouch type battery cells or prismatic battery cells.

Referring to FIG. 6, a pair of busbar housing assemblies 130 are arranged on the front and rear surfaces of the stack of a plurality of battery cells 110. Each of the busbar housing assemblies 130 is arranged in a direction orthogonal to the longitudinal direction of the battery cell 110 (e.g., the X-axis direction in the figure). The busbar housing assembly 130 includes an opening through which the electrode lead 110a of the battery cell 110 passes, and each electrode lead 110a of the plurality of battery cells 110 is coupled to a busbar electrode disposed on the outer surface of the busbar housing assembly 130.

A pair of end plates 120 are provided at both side ends of the stack of the plurality of battery cells 110, respectively. The end plate 120 is arranged in parallel with the battery cell 110. A pair of end plates 120 each connect a pair of busbar housing assemblies 130.

Each of the upper and lower sides between the pair of end plates 120 may include at least one strap 140 that connects between the pair of end plates 120. The strap 140 strengthens the binding of the cell module assembly 100. More specifically, it strengthens the binding between the pair of end plates 120 and the stack of the plurality of battery cells 110 arranged between them. Thereby, it is possible to prevent the alignment of the stack of the plurality of battery cells 110 from being disturbed.

In addition, since the description regarding the cell module assembly 100 overlaps with that described above in FIG. 1, refer to those described above in relation to FIG. 1.

Meanwhile, as shown in FIG. 5, a plurality of battery cells 110 can be grouped into a predetermined number and housed. Further, as shown in FIGS. 5 to 9, a blocking member 200 is provided between a group of a plurality (a predetermined number) of battery cells 110 and an adjacent group of a plurality (a predetermined number) of battery cells 110.

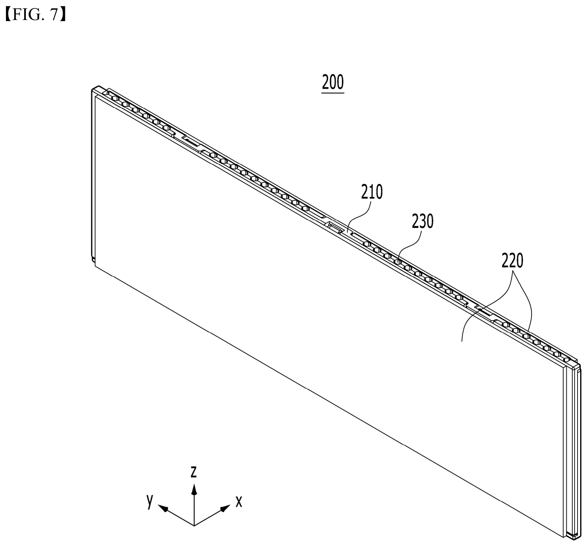

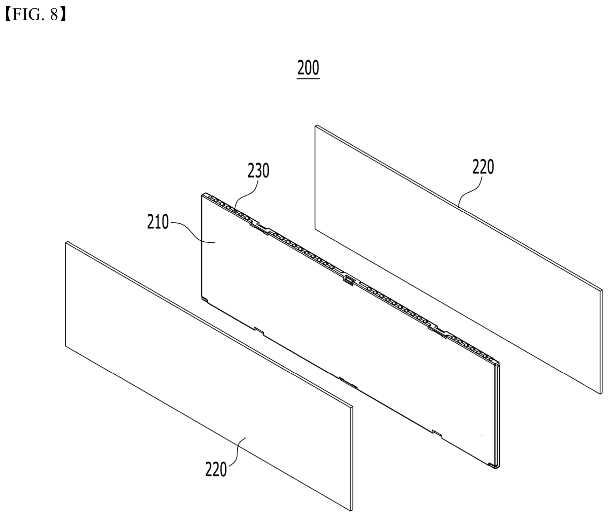

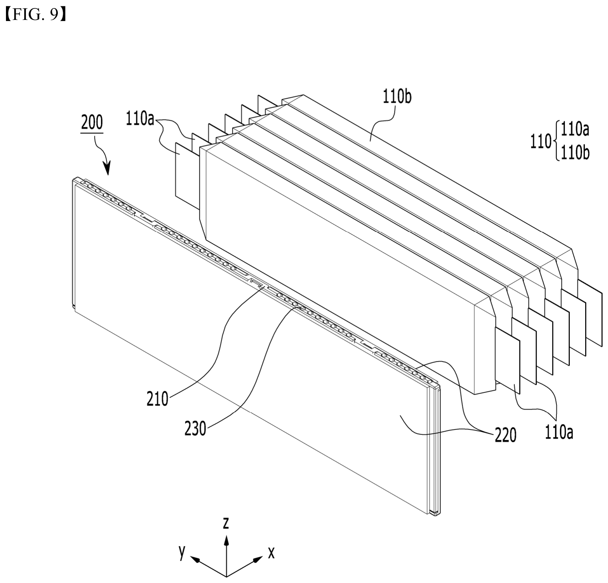

FIG. 7 is a perspective view of a blocking member 200 included in the battery pack of FIG. 5. FIG. 8 is an exploded perspective view of the blocking member 200 of FIG. 7. FIG. 9 shows a diagram in which the blocking member 200 of FIG. 7 and the battery cell 110 are arranged side by side.

The blocking member 200 may be configured to be interposed between adjacent battery cells 110 to block heat. For example, when a thermal event occurs in some of the battery cells 110 and heat or high-temperature venting gas is generated, the generated heat or gas may be suppressed or blocked from being transferred to the adjacent battery cell 110 by the blocking member 200. Further, the blocking member 200 can play a role of blocking flames or sparks emitted from a specific battery cell 110.

The blocking member 200 has a substantially plate-like shape. The blocking member 200 may be configured in a plate shape being erected in the up and down direction. Moreover, the blocking member 200 may have a height that is the same as or similar to the height of the battery cell 110 being erected in the up and down direction. The height of the blocking member 200 may be smaller or larger than the height of the battery cell 110.

A plurality of blocking member 200 may be included depending on the number of battery cells. And, as described above, the blocking member 200 can be stacked together with the battery cells 110 to form the cell module assembly 100.

According to such an embodiment configuration of the present disclosure, in a battery pack containing a plurality of battery cells 110, propagation of thermal runaway between cells can be effectively prevented by the blocking member 200.

Further, the blocking member 200 may be largely formed of a three-layer structure. For example, a pair of swelling pads 220 are provided on both surfaces of the support plate 210, respectively. The support plate 210 maintains the shape and rigidity of the blocking member 200 and blocks flames or sparks emitted from the battery cells 110 between the battery cells 110. The support plate 210 may be made of, for example, a metal material. The swelling pad 220 reduces the pressure applied to the battery cell 110 by the support plate 210 when the battery cell 110 swells. The swelling pad 220 may be made of, for example, silicone or soft plastic material.

On the other hand, the support plate 210 includes a plurality of through holes 230 formed by penetrating the support plate 210 in the up and down direction as shown in detail in FIGS. 7 and 8, wherein the plurality of through holes 230 are arranged along the longitudinal direction of the support plate 210.

When fire extinguishing agent (fire extinguishing liquid) is injected into the cell module assembly 100 from the fire extinguishing tank 400 located at the upper part of the cell module assembly 100, a fire extinguishing agent (fire extinguishing liquid) also enters the plurality of through holes 230. That is, as the fire extinguishing agent (fire extinguishing liquid) remains in the plurality of through holes 230, the battery cell 110 in which the thermal event has occurred can be cooled and extinguished more effectively.

The plurality of through holes 230 may be configured to be opened on both sides of the upper and lower surfaces of the support plate 210. Alternatively, the plurality of through holes 230 may have a shape in which only the upper surface is opened and the lower surface is closed so that the fire extinguishing agent (fire extinguishing liquid) can remain within the through holes 230 for a longer period of time. In the former case, if the support plate 210 of the blocking member 200 is arranged in close contact with the inner lower surface of the pack case 300, the fire extinguishing agent (fire extinguishing liquid) may remain in the through hole 230 for a long period of time as in the latter case.

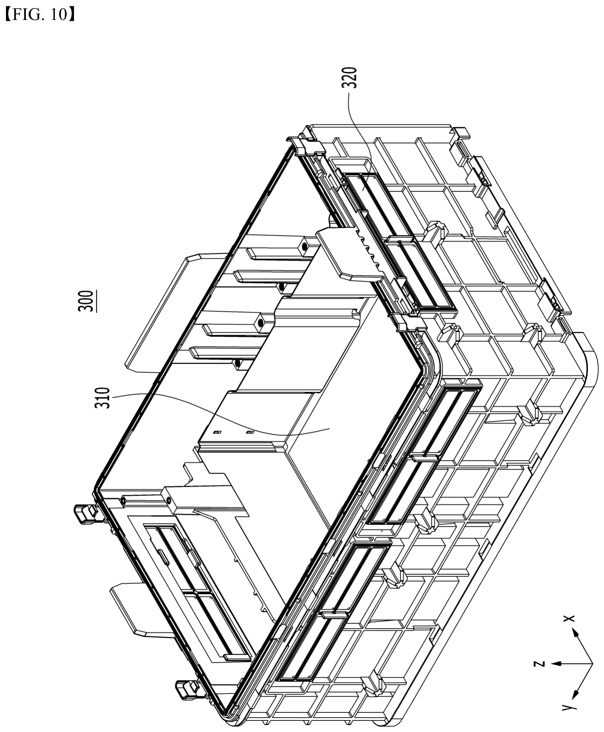

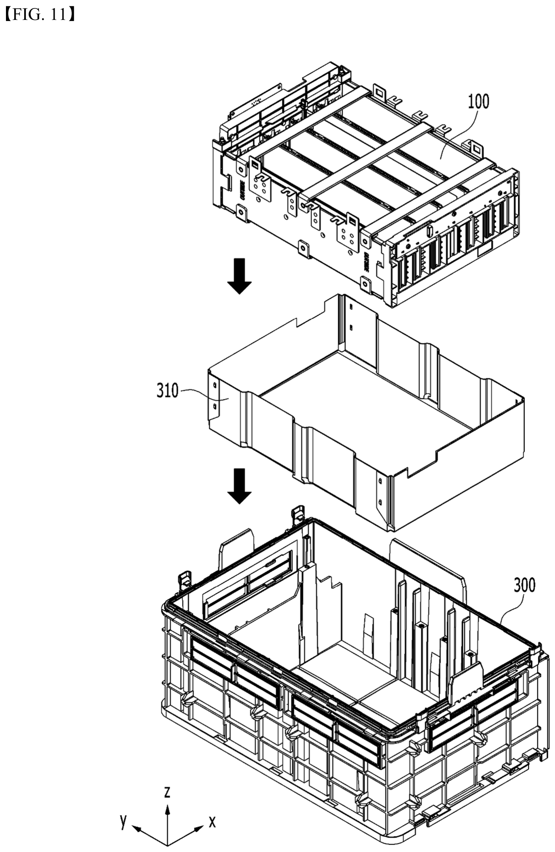

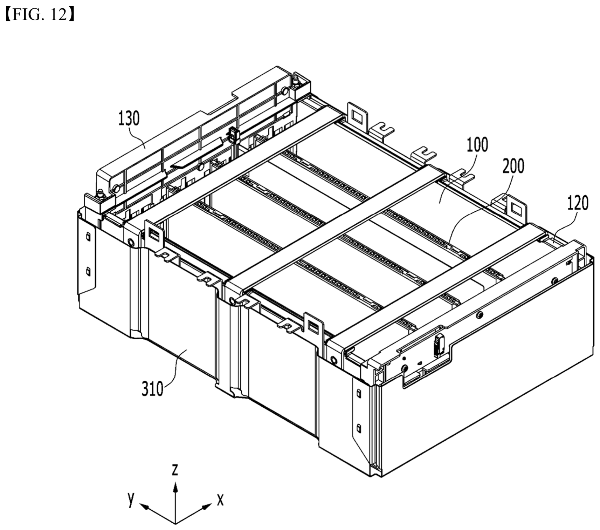

FIG. 10 is a perspective view of a pack case 300 included in the battery pack of FIG. 5. FIGS. 11 and 12 are diagrams illustrating a case where the cell module assembly 100 of FIG. 10 is housed in a pack case 300.

Referring to FIG. 10, the pack case 300 may be configured in a box shape. The box-shaped pack case 300 may be integrally molded, or may be fabricated in such a manner that at least one surface is coupled with an adjacent surface.

The pack case 300 includes at least one venting port 320. A filter is installed in the venting port 320.

When a thermal event occurs in the battery cell 110 housed inside the pack case 300, it is possible to discharge the venting gas generated from the battery cell 110 through the venting port 320. The venting gas discharged from the venting port 320 may pass through a space between the pack case 300 and the outer cover 500 (see FIG. 5) and be discharged to the outside of the outer cover 500.

Meanwhile, as shown in FIGS. 11 and 12, the cell module assembly 100 shown in FIG. 6 may be housed in the internal space of an auxiliary case 310, and then be mounted on the pack case 300. The cell module assembly 100 is primarily housed in the internal space of the auxiliary case 310, and then finally housed in the pack case 300, thereby supplementing the rigidity of the cell module assembly 100 and preventing the alignment of the stack of the plurality of battery cells 110 at the cell module assembly 100 from being disturbed. The auxiliary case 310 may be made of metal, stainless steel, or the like, by way of example.

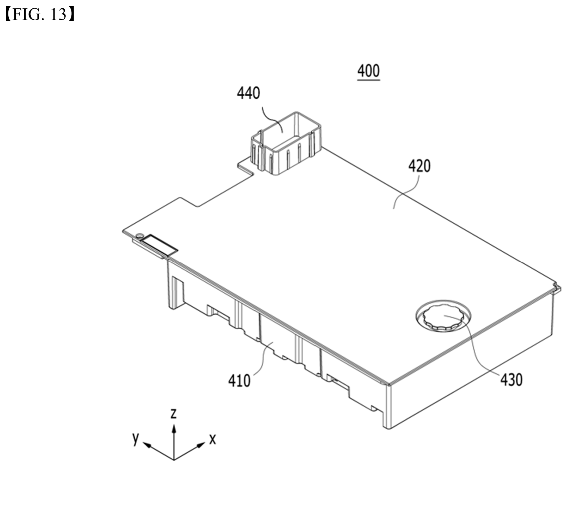

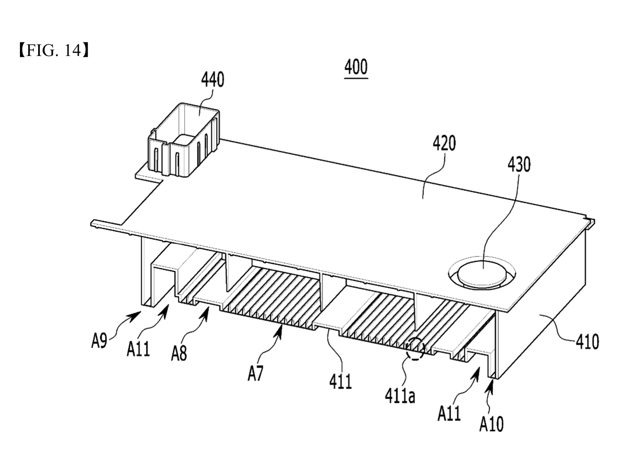

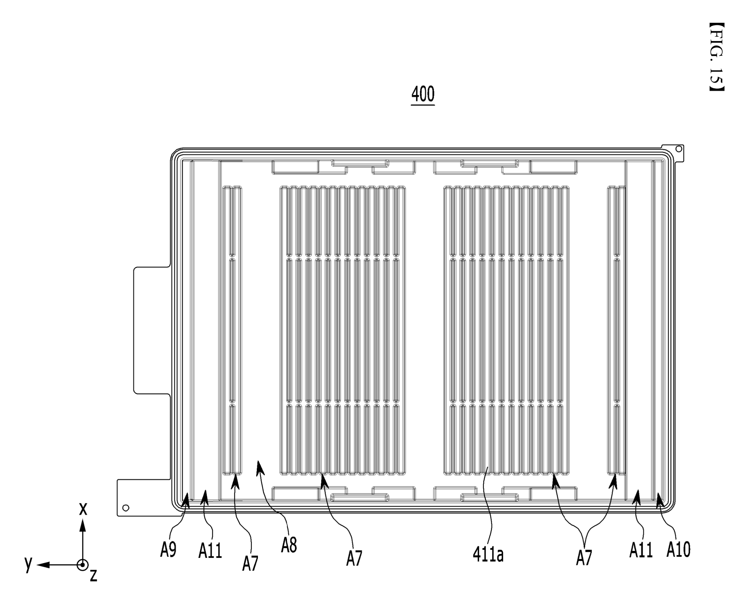

FIG. 13 is a perspective view of a fire extinguishing tank 400 included in the battery pack of FIG. 5. FIG. 14 is a perspective cross-sectional view of the fire extinguishing tank 400 of FIG. 13, and shows a cross section taken along line A5-A5' of FIG. 5. FIG. 15 is a top cross-sectional view of the lower tank 410 of the fire extinguishing tank 400 when viewed from above.

Referring to FIG. 13, the fire extinguishing tank 400 includes a lower tank 410 and an upper cover 420 as described above in FIG. 1. The lower tank 410 and the upper cover 420 may be fabricated separately and seal bonded together, or may be fabricated integrally. The upper cover 420 may further include an injection port 430 capable of injecting a fire extinguishing agent. The injection port 430 can be closed with a stopper to seal the fire extinguishing tank 400.

Referring to FIG. 14, the portion formed to have a thin thickness in the base plate 411 of the lower tank 410 may function as a fragile portion 411a. That is, when a thermal event occurs in the battery cell 110 of the cell module assembly 100, the fragile portion 411a having a relatively thin thickness may be damaged first. When the fragile portion 411a is damaged and an opening is formed in the base plate 411, the fire extinguishing agent held inside the fire extinguishing tank 400 may be discharged to the cell module assembly 100 side via the fragile portion 411a.

The fragile portion 411a may be provided in a plurality of numbers. For example, the fragile portion 411a may have a shape narrow in width and long in length. That is, it has a linear shape and may have a straight line shape arranged in parallel with one edge of the fire extinguishing tank 400, and each fragile portion 411a may be arranged in parallel with one another.

Meanwhile, according to the present embodiment, the longitudinal direction of the battery cell 110 (e.g., the Y-axis direction in the figure) and the longitudinal direction of the fragile portion 411a (e.g., the X-axis direction in the figure) may be orthogonal to each other. That is, a plurality of fragile portions 411a are arranged to intersect in the longitudinal direction of the battery cell 110. Accordingly, the fire extinguishing agent can be supplied all together through the plurality of opened fragile portions 411a via the battery cell 110 along the longitudinal direction of the battery cell 110 where a thermal event has occurred, and the battery cell 110 in which a thermal event has occurred can be extinguished more efficiently and quickly.

Further, referring to FIG. 14, the base plate 411 of the lower tank 410 has a step. Particularly, the base plate 411 of the lower tank 410 protrudes downward to the side of the portion where the electrode lead 110a of the battery cell 110 is located. Flames are more often discharged from the lead portion of the battery cell 110 at the time of thermal event than from the other portions of the battery cell 110. The base plate 411 of the fire extinguishing tank 400, i.e., the lower tank 410, is made adjacent the portion where the electrode lead 110a of the battery cell 110 is located as much as possible, so that ignition of the battery cell 110 is extinguished quickly and effectively at an early stage.

In the base plate 411 of the lower tank 410, a portion located above the electrode lead 110a of the battery cell 110 may have a height which is equal to or lower than that of the main body 110b of the battery cell 110. For example, as shown in FIG. 14, the height of the base plate 411 of the lower tank 410 corresponding to the portion where the electrode lead 110a of the battery cell 110 is located may be the lowest.

The width (height in the Z-axis direction) of the electrode lead 110a is smaller than the width of the main body 110b of the battery cell 110 (see FIG. 9). When the battery cell 110 is erected vertically so that the width direction is in the Z-axis direction, a height in the Z-axis direction of the bottom part of the electrode lead 110a is smaller than a height in the Z-axis direction of the bottom part of the main body 110b of the battery cell 110. Correspondingly, the base plate 411 of the lower tank 410 of the fire extinguishing tank 400 may have a lower height at the portion corresponding to the electrode lead 110a of the battery cell 110 than at the portion corresponding to the main body 110b of the battery cell 110.

Referring again to FIG. 14, the base plate 411 is largely divided as follows. It is composed of a portion A7 located on the main body 110b of the battery cell 110, a portion A8 abutting against the strap 140 of the cell module assembly 100, portions A9 and A10 located on the electrode lead 110a side, and a portion A11 located on the busbar housing assembly 130 side.

The portions A9 and A10 located on the electrode lead 110a side includes a shape that protrudes on the electrode lead 110a side. In more detail, the portions A9 and A10 located on the electrode lead 110a side have a shape that protrudes at least on the electrode lead 110a side more than the portion A11 located on the busbar housing assembly 130 side. In some cases, as shown in FIGS. 13 and 14, the height of the base plate 411 at the portions A9 and A10 located on the electrode lead 110a side may be the lowest. In more detail, the height of the base plate 411 of the portions A9 and A10 located on the electrode lead 110a side may be the same as that of the portion A7 located on the main body 110b side of the battery cell 110. However, depending on the environment in which the invention is realized, the height of the base plate 411 of the portions A9 and A10 located on the electrode lead 110a side may be the lowest in height than the portion A7 located on the main body 110b side of the battery cell 110 as shown in FIGS. 13 and 14.

In addition, as portions A9 and A10 located on the electrode lead 110a side, the portion having a shape that protrudes on the electrode lead 110a side may be disposed on the outer surface of the busbar housing assembly 130. In more detail, the outer surface of the busbar housing assembly 130 means a surface where the electrode leads 110a are coupled to the busbar electrode.

However, the present disclosure is not necessarily limited thereto, and if a space exists between the inner surface of the busbar housing assembly 130 and the battery cell 110, that portion may also have a protruding shape.

In summary, according to one embodiment of the present disclosure, the base plate 411 of the lower tank 410 of the fire extinguishing tank 400 includes a portion that protrudes downward to the side of the electrode lead 110a of the battery cell 110. By ensuring that the base plate 411 of the lower tank 410 of the fire extinguishing tank 400 is disposed as much as possible on the electrode leads 110a as well as the body 110b of the battery cell 110, when overheating or ignition occurs in some of the battery cells 110, rapid initial suppression is performed to more effectively prevent the occurrence of a dangerous situation such as secondary explosions due to transfer of heat or flame to adjacent battery cells 110. In addition, the fire extinguishing tank 400 is arranged as close as possible to the electrode lead 110a, which is a portion of the battery cell 110 that is more likely to ignite and is prone to erupting flames, thereby making it possible to respond quickly and effectively to any thermal events occurring in the battery cell 110. In more detail, as shown in FIG. 6 regarding the cell module assembly 100, the height of the cell module assembly 100 is not constant due to the portion where the strap 140 is located, the portion where the busbar housing assembly 130 is located, and the like. Regardless of this, if the height of the base plate 411 of the lower tank 410 of the fire extinguishing tank 400 is constant as a whole, a relatively empty space is created between the base plate 411 of the fire extinguishing tank 400 and the upper surface of the cell module assembly 100. In such a case, heat transfer from the battery cell 110 whose temperature has risen to the fragile portion 411a is interrupted due to the empty space, whereby fire extinguishment is delayed accordingly.

When the battery cell 110 overheats, the fragile portion 411a is arranged immediately adjacent to the battery cell 110 whose temperature has risen, so that the fragile portion 411a is immediately damaged, and the battery cell 110 can be quickly cooled and extinguished.

In summary, the lower surface of the base plate 411 of the fire extinguishing tank 400 and the upper surface of the cell module assembly 100 have shapes that generally match each other. Accordingly, since the fire extinguishing tank 400 is arranged in closer contact with the cell module assembly 100, the battery cell 110 whose temperature has risen can be more effectively cooled, and a fire extinguishing agent can be injected more quickly into the battery cell 110 where overheating or ignition has occurred. Further, more extinguishing agent can be efficiently housed in the fire extinguishing tank 400. That is, if the height of the base plate 411 of the lower tank 410 of the fire extinguishing tank 400 is constant as a whole, the fire extinguishing tank 400 houses less fire extinguishing agent by the corresponding empty space.

For reference, as shown in FIG. 14, the fragile portion 411a may be provided in the portion A7 located on the main body 110b side of the battery cell 110 and the portions A9 and A10 located on the electrode lead 110a side, but the present disclosure is not limited to those shown in the figure, and various modifications and changes are possible, such as being provided at the portion A8 that abuts against the strap 140. Further, the number and shape of the fragile portions 411a are not limited to those shown in the figure, and various modifications and changes are possible.

Similarly, although not shown in FIG. 14, the portions A9 and A10 of the base plate 411 located on the electrode lead 110a side may also have a structure including a fragile portion 411a. Alternatively, as shown in FIG. 14, even though the portions A9 and A10 of the base plate 411 located on the electrode lead 110a side does not have a separate fragile portion 411a, it may have a thickness sufficient to form an opening in the portions A9 and A10 of the base plate when a thermal event occurs. For example, the thickness of the portions A9 and A10 of the base plate 411 may be substantially equal to the thickness of the fragile portion 411a.

Meanwhile, referring to FIGS. 14 and 15, the portion A9 among the portions A9 and A10 located on the electrode lead 110a side is also disposed adjacent to the electrical connection unit 600. The portion A9 among the portions A9 and A10 located on the electrode lead 110a side is a portion located on the electrical connection unit 600 described below, which is located at the upper part of the space between the electrical connection unit 600 and the busbar housing assembly 130, and may protrude downward toward the electrode lead 110a.

Meanwhile, the portion indicated by A11 in FIG. 14 is a portion located on the busbar housing assembly 130, and in order to match an embodiment in which the heights of the busbar housing assemblies 130 at both ends are different (see FIG. 6), FIG. 14 shows a case in which the heights of the portions indicated by A11 on both sides are designed to be different correspondingly. However, note that this corresponds only to one embodiment, and the present disclosure is not necessarily limited to the height of the portion indicated by A11 on both sides as shown in FIG. 14.

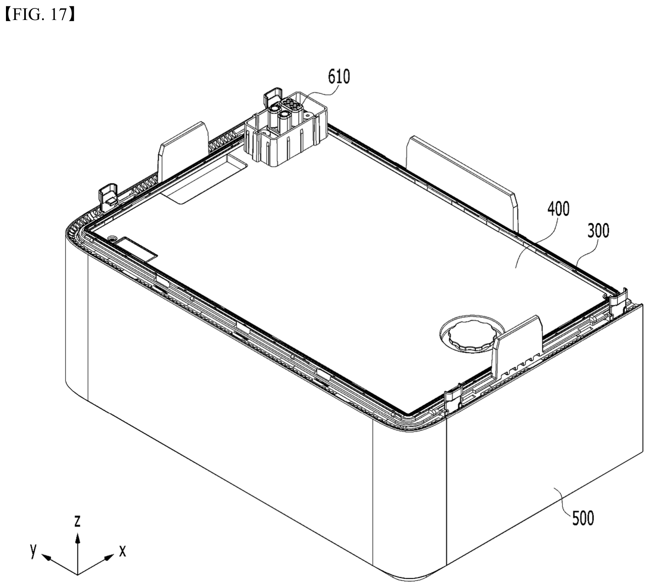

In some cases, although not shown in the present disclosure, the base plate 411 may be fabricated to engage with the upper structure of the electrical connection unit 600. That is, when the portion A9 is located above the electrical connection unit 600, it may have a step depending on the height of the electrical connection unit 600. In addition, in some cases, as shown in FIG. 17, the connector 610 passes through so as to electrically connect cell module assemblies 100 to each other when stacking a plurality of battery packs 110, and thus, the fire extinguishing tank 400 may also have a connector through hole portion 440 for this purpose.

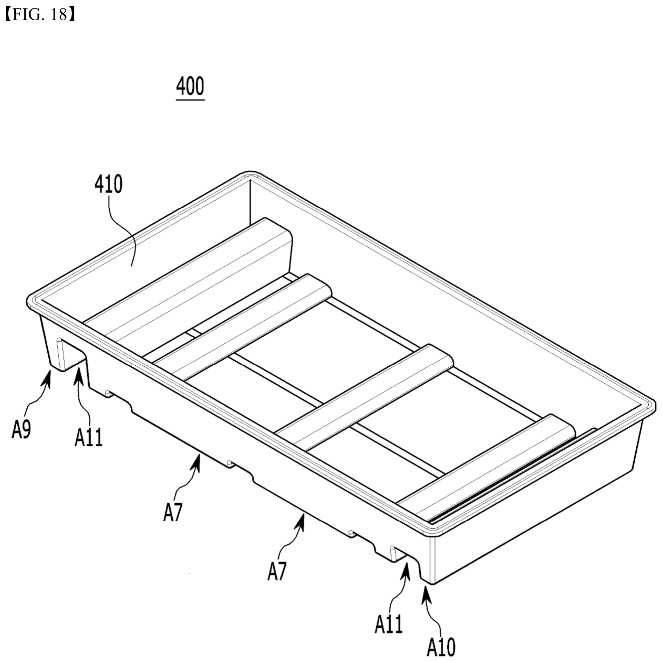

However, the present disclosure is not limited thereto, and the portions A9 and A10 located on the electrode lead 110a side of the base plate 411 of the lower tank 410 of the fire extinguishing tank 400 is sufficient to have a shape protruding to the side of the electrode lead 110a. Various modifications and changes are possible depending on the various environments in which the invention is realized and the design and structure of the battery pack. Depending on the structure and/or positional changes of the electrical connection unit 600 and the connector 610, it goes without saying that the fire extinguishing tank 400 may not have the connector through hole portion 440 as shown in FIGS. 18 to 20. The fire extinguishing agent provided in the fire extinguishing tank 400 may be, for example, in the form of a fire extinguishing liquid, and repeated descriptions thereof are omitted, and reference will be made to those set forth above.

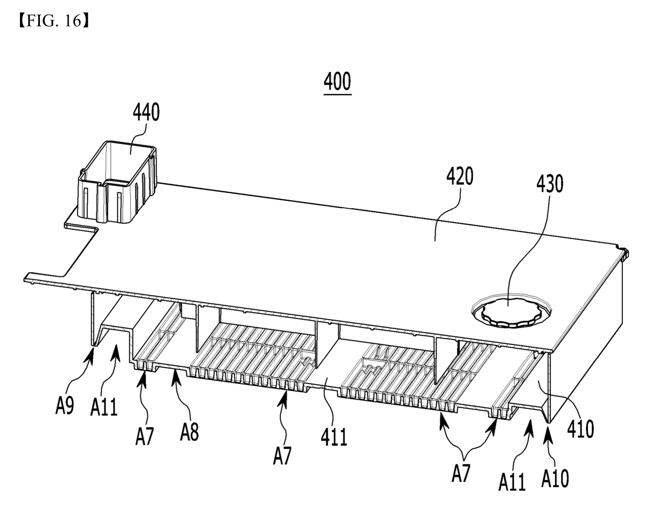

FIG. 16 shows a modified embodiment of the fire extinguishing tank shown in FIGS. 5 to 15, which shows a case where the height of the base plate 411 in the portions A9 and A10 located on the electrode lead 110a side is modified. FIG. 16 shows a perspective cross-sectional view similar to FIG. 14.

The embodiment of FIG. 16 shows a case in which portions A9 and A10 located on the electrode lead 110a side protrude as shown in FIG. 14, but shows a modified embodiment when there is insufficient space to place portions A9 and A10 located on the electrode lead 110a side due to other components disposed on the busbar housing assembly 130. In more detail, even in FIG. 16, the portions A9 and A10 located on the electrode lead 110a side protrude toward the electrode lead 110a than the portion A11 located at least above the busbar housing assembly 130. Therefore, the base plate 411 of the fire extinguishing tank 400 is provided as close as possible to the electrode lead 110a (rather than the height of the busbar housing assembly 130), which makes it possible to improve fire extinguishing performance when a thermal event occurs. Since other explanations overlap with those described above in FIGS. 13 to 15, refer to the corresponding parts.

FIG. 17 is a perspective view of a battery pack in which all of the constituent elements of the above-mentioned battery pack are coupled with each other with reference to FIGS. 5 to 16.

In addition, for the portions where the description regarding the battery pack in FIGS. 5 to 17 overlaps with the description regarding the battery pack in FIGS. 1 to 4, refer to those described above with reference to FIGS. 1 to 4.

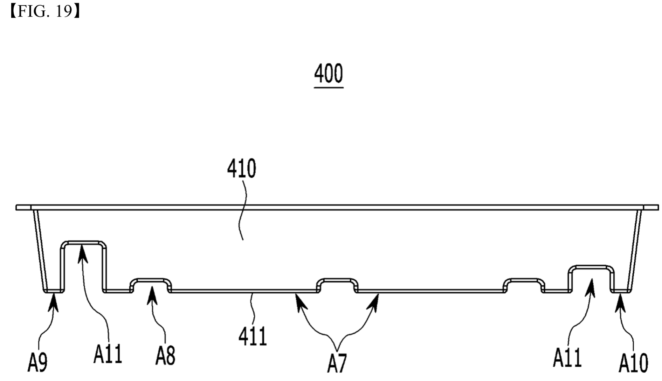

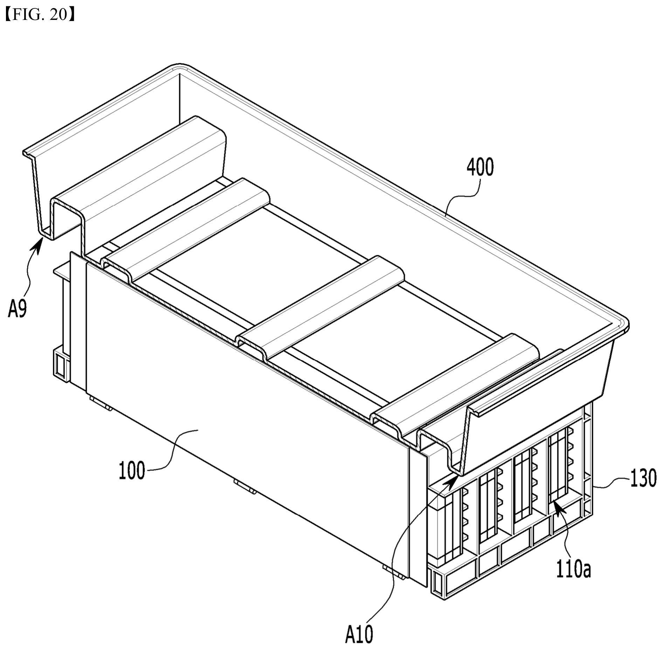

FIGS. 18 to 20 show modified embodiments of the battery packs of FIGS. 1 to 5. FIG. 18 is a perspective view of the fire extinguishing tank 400, and FIG.19 is a front view of the fire extinguishing tank 400. FIG. 20 shows a cross-sectional view of the fire extinguishing tank 400 when it is located above the cell module assembly 100. For convenience of understanding, the lower tank 410 among the fire extinguishing tanks 400 is shown.

FIGS. 18 to 20 shows a case in which the electrical connection unit 600 (electrical unit, see FIG. 5) is omitted. FIGS. 18 to 21 may show, for example, a case where the battery module is realized in battery module units that are smaller in scale than the battery pack of FIG. 5. The battery pack shown in FIG. 20 may be a case in which the electrical connection unit 600 of FIG. 5 may be realized by changing the arrangement position. In the cases of FIGS. 18 to 20, the fire extinguishing tank 400 does not necessarily have to have the connector through hole portion 440.

Similarly even in the embodiment of FIGS. 18 to 20, the portions A9 and A10 located above the electrode lead 110a are also made to protrude downward. Accordingly, even in FIGS. 13 to 15, the fire can be extinguished more effectively than in the case where the electrode lead 110a of the battery cell 110 ignites first as described above.

In the base plate 411 of the lower tank 410, the portion located on the electrode lead 110a of the battery cell 110 may have the same height as or may be different from the portion where the main body 110b of the battery cell 110 is located. As shown in FIG. 19, the heights of the base plates of the portion A10 located on the electrode lead 110a of the battery cell 110 and the portion A7 located on the main body 110b (see FIG. 9) of the battery cell 110 may be equal to each other. Alternatively, in some cases, the height of the base plate 411 of the portion A10 located above the electrode lead 110a of the battery cell 110 and the portion A7 located above the main body 110b of the battery cell 110 may also be different.

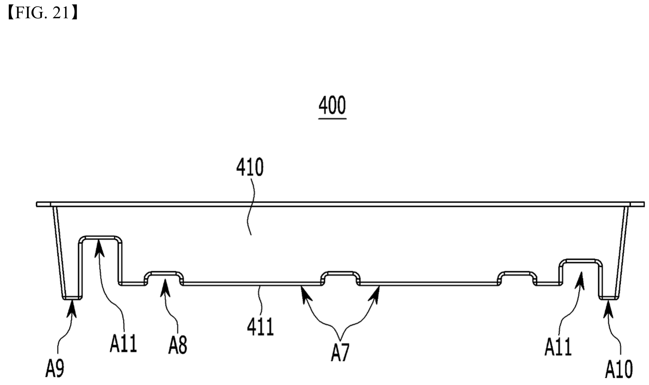

FIG. 21 shows a partially modified embodiment of the fire extinguishing tank of the battery pack of FIG. 18, which shows a front view of the fire extinguishing tank. As shown in FIG. 21, the height of the portion A10 where the electrode lead 110a is located may be the lowest.

For further details, refer to those described above with reference to FIGS. 1 to 16.

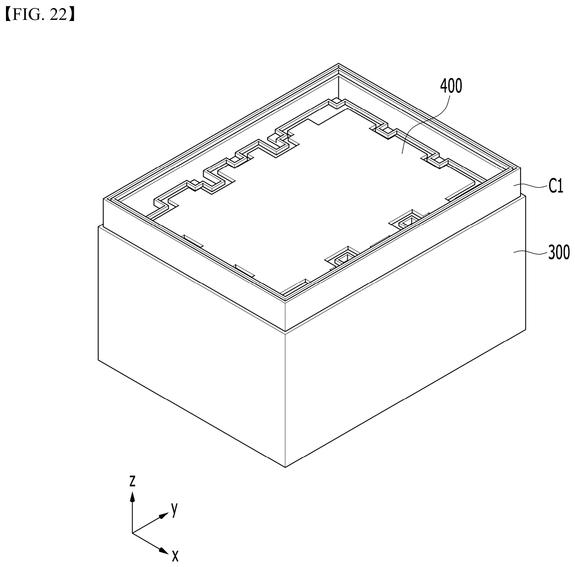

Meanwhile, the pack case 300 may be provided in a plurality of numbers, and be configured so as to be stacked in the up and down direction. This will be described in more detail with reference to FIG. 22.

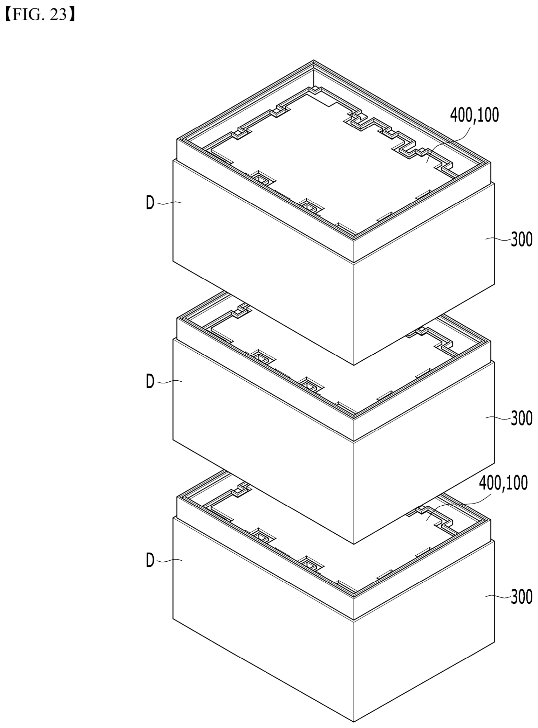

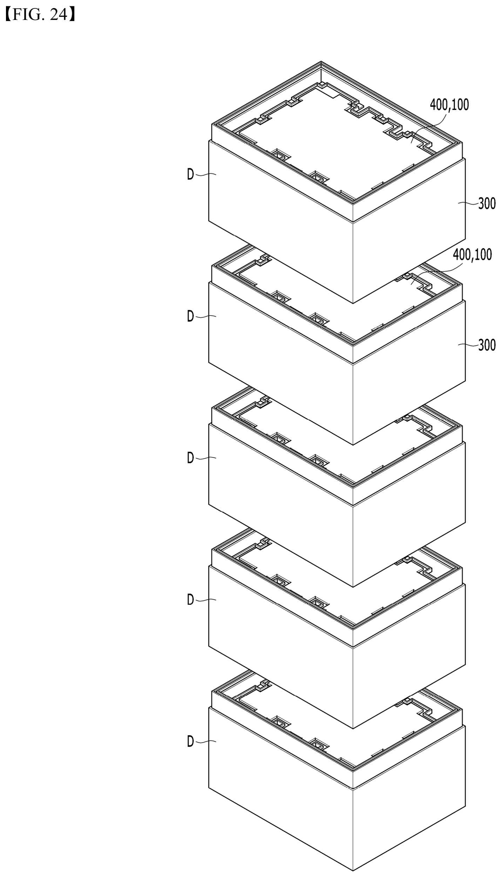

FIG. 22 is a perspective view schematically showing at least a partial configuration of the battery pack of FIGS. 1 to 17 according to the present disclosure. Further, FIGS. 23 and 24 are diagrams showing an embodiment in which the pack cases 300 shown in FIG. 22 are stacked in a plurality of numbers.

First, referring to FIG. 22, the pack case 300 may include a bottom portion and a side wall portion. The cell module assembly 100 can be housed in the internal space of the pack case 300, and the upper surface of the cell module assembly 100 can be covered with the fire extinguishing tank 400, thereby constituting a battery pack. For reference, in FIG. 22, the height of the upper side of the pack case 300 is shown to be larger than the height of the upper surface of the fire extinguishing tank 400. However, FIG. 22 is a schematic diagram and is only an embodiment, and the present disclosure is not limited to those shown in FIG. 22. That is, on the contrary, the height of the upper surface of the fire extinguishing tank 400 may be larger than the height of the upper side of the pack case 300, and the height of the upper surface of the fire extinguishing tank 400 and the height of the upper side of the pack case 300 may be equal. Thus, various modifications are possible.

The pack cases 300 as shown in FIG. 22 may be provided in a plurality of numbers to form a stacked structure of the battery packs as shown in FIG. 23 or FIG. 24. At this time, the battery pack in FIG. 22 may be one unit pack. And, such unit packs are provided in a plurality of numbers, so that an entire battery pack can be constructed in a module-stacked manner as shown in FIG. 23 or FIG. 24.

More specifically, for example, the configuration of FIG. 23 illustrates that three unit packs D are stacked in the up and down direction. And, the configuration of FIG. 24 illustrates that five unit packs D are stacked in the up and down direction. The present disclosure is not limited to those shown in the figure, and the number of unit packs D can be variously changed to match with the environment in which the present disclosure is realized.

For example, if the present disclosure is realized by a battery pack as an energy storage system (ESS), the number of unit battery packs can be adjusted, so that the voltage range and/or storage capacity of the energy storage device can be realized to match with the relevant environment. According to such an embodiment configuration of the disclosure, by stacking one unit pack with a common structure in various ways, it is possible to realize products with various voltage ranges and/or storage capacities depending on the number of stacking. For example, by adjusting the number of stacking of the same unit pack, it may be possible to realize both a low-pressure range product as shown in FIG. 23 and a high-pressure range product as shown in FIG. 24. Therefore, compared to products limited only to specifications of a specific voltage range, economic efficiency and compatibility can be improved. Further, according to such an embodiment configuration, products with various capacities can also be realized depending on the number of stacking.

In other words, when stacked unit packs are connected in series, products with various voltage ranges can be realized depending on the number of stacking. Further, when stacked unit packs are connected in parallel, products with various capacities (storage capacity) can be realized depending on the number of stacking.

In particular, each unit pack D may include a cell module assembly 100 therein. Further, each unit pack D includes a connector 610 so that each cell module assembly 100 can be electrically connected to each other during stacking as described above. In particular, such connectors 610 may be configured to be coupled to each other due to the vertical stacking of each unit pack D.

Moreover, in the above embodiment configuration, each unit pack D may house a fire extinguishing tank 400 along with a cell module assembly 100. That is, each unit pack D includes a fire extinguishing tank 400 at the upper part of the cell module assembly 100, as described above. The battery packs stacked in a plurality of numbers have a stacked structure of fire extinguishing tank 400 - cell module assembly 100 - fire extinguishing tank 400 - cell module assembly 100 from top to bottom. The stacked battery pack of the present disclosure having such a structure can form a battery pack by increasing (expanding) the number of cell module assemblies 100 to increase various voltage ranges and storage capacities, and also can safely provide against a thermal event such as a fire in the cell module assembly 100. Therefore, according to this embodiment configuration of the present disclosure, the safety of the battery pack can be further improved.

In another embodiment of a coupling method between battery packs (pack case 300) stacked one up and down, the following description is given with reference again to FIG. 22. At the upper end of the side wall portion of the pack case 300, there may be a step formed in a concave shape inward, such as a step portion C1 for coupling. For example, the side wall portion of the pack case 300 has a thinner thickness. Further, although not shown in FIG. 22, a coupling recess may be formed in the bottom of the pack case 300 so that the coupling step C1 of the side wall portion can be inserted. That is, when different pack cases 300 are stacked in the up and down direction, the pack case 300 can be configured so that the coupling step C1 formed on the upper side of the side wall portion of the lower pack case 300 is inserted into the coupling recess formed in the bottom of the upper pack case 300. Accordingly, when the plurality of pack cases 300 are stacked and coupled in the up and down direction, the outer surface of the pack case 300 may have a flat shape as a whole.

On the other hand, the coupling method for the fastening structure between the battery packs stacked up and down is not limited to those shown in FIG. 22 and/or FIG. 10, and various other coupling methods can be modified or changed and applied to the present disclosure.

Further, the battery packs of the present disclosure can be connected to a battery management system (BMS, not shown). The battery management system monitors and manages the battery pack(s). The battery management system may be located on the uppermost layer of battery packs stacked up and down. However, the position of the battery management system is not limited to those described above, and can be modified and changed in various ways to match with the method or environment in which the present disclosure is realized.

The battery pack according to the present disclosure may further include various other constituent elements included in the battery pack, in addition to the above-mentioned constituent elements. For example, the battery pack according to the present disclosure may include various electrical components for controlling or managing the charge and discharge of the battery pack, such as a battery management system (BMS), relays, fuses, and current sensors.

An energy storage system (ESS) according to the present disclosure includes one or more battery packs according to the present disclosure as described above. Further, the energy storage device according to the present disclosure may further include common components included in energy storage devices in addition to the battery pack.

Meanwhile, the terms representing directions such as the upper side, the lower side, the left side, and the right side have been used in the present embodiment, but the terms used are provided simply for convenience of description and may become different according to the position of an object, the position of an observer, or the like, which is obvious to those skilled in the art.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

### [Description of Reference Numerals]

100: cell module assembly
110: battery cell
120: end plate
130: busbar housing assembly
200: blocking member
210: support plate
220: swelling pad
230: through hole
300: pack case
300a: lower case
300b: upper case
310: auxiliary case
320: venting port
400: fire extinguishing tank
410: lower tank
411: base plate
411a: fragile portion
412: side wall
420: upper cover
430: injection port
440: connector through hole portion
500: outer cover
600: electrical connection unit
610: connector

## Claims

1. A battery pack comprising:
a cell module assembly including a battery cell stack in which a plurality of battery cells are stacked and a busbar housing assembly in which an electrode lead of the battery cell is coupled to a busbar electrode;
a pack case in which the cell module assembly is housed and whose upper surface is opened; and
a fire extinguishing tank that covers an upper surface of the cell module assembly,
wherein the fire extinguishing tank includes:
an internal space that houses a fire extinguishing agent; and
a plurality of fragile portions that are configured to form the base plate of the fire extinguishing tank to be relatively thin in thickness, and are melted and opened by a thermal event of the battery cell, and
wherein a portion of the base plate of the fire extinguishing tank that is located at least above the electrode lead of the battery cell includes a shape that protrudes downward toward the electrode lead of the battery cell.

2. The battery pack according to claim 1, wherein:
the base plate of the fire extinguishing tank has a step, and the height of the portion located above the electrode lead of the battery cell is lower than the height of the portion located at least above the busbar housing assembly.

3. The battery pack according to claim 1, wherein:
the base plate of the fire extinguishing tank has a step, and the height of the portion located above the electrode lead of the battery cell is equal to or lower than the height of the portion where the main body of the battery cell is located.

4. The battery pack according to claim 1, wherein:
in the base plate of the fire extinguishing tank, a portion located above the electrode lead of the battery cell is adjacent to the electrode lead.

5. The battery pack according to claim 1, wherein:
in the portion located above the electrode lead of the battery cell, a shape that protrudes downward toward the electrode lead of the battery cell is located on the outer surface of the busbar housing assembly.

6. The battery pack according to claim 1, wherein:
the fragile portion has a linear shape, and is arranged in parallel to one edge of the fire extinguishing tank, with each fragile portion being arranged in parallel to each other, and
the longitudinal direction of the fragile portion and the longitudinal direction of the battery cell are orthogonal to each other.

7. The battery pack according to claim 1, wherein:
the fragile portion has a linear shape, and is arranged in parallel to one edge of the fire extinguishing tank, with each fragile portion being arranged in parallel to each other,
the longitudinal direction of the fragile portion and the longitudinal direction of the battery cell are parallel to each other, and
the fragile portion is disposed between two battery cells adjacent to each other.

8. The battery pack according to claim 1, wherein:
the fragile portion is also provided in a portion that protrudes downward toward the electrode lead of the battery cell among portions located above the electrode lead of the battery cell.

9. The battery pack according to claim 1, wherein:
the thickness of the portion that protrudes downward toward the electrode lead of the battery cell among portions located above the electrode lead of the battery cell is equal to the thickness of the fragile portion.

10. The battery pack according to claim 1, wherein:
the fire extinguishing tank is fabricated by plastic injection molding.

11. The battery pack according to claim 1, wherein:
the cell module assembly includes:
a pair of end plates disposed in parallel to the battery cells at both side ends of the battery cell stack, wherein the pair of end plates are connected between a pair of busbar housing assemblies.

12. The battery pack according to claim 11, wherein:
the cell module assembly includes:
straps that respectively connects the upper and lower sides of the pair of end plates of the battery cell stack so as to strengthen binding of the cell module assembly.

13. The battery pack according to claim 12, wherein:
the base plate has a step, and the height of the portion where the plurality of fragile portions are disposed is lower in height from the lower surface of the battery pack than the portion located on the strap.

14. The battery pack according to claim 1, wherein:
the fire extinguishing agent is a fire extinguishing agent in a liquid state.

15. The battery pack according to claim 1, wherein:
the battery pack is provided as a plurality of battery packs, and
the plurality of battery packs are coupled to each other through mechanical or electrical connection.

16. The battery pack according to claim 15, wherein:
the plurality of battery packs can be stacked in an up and down direction.

17. The battery pack according to claim 15, wherein:
the electrical connection between the plurality of battery packs is made in series so that the voltage range of the plurality of battery packs can be realized in various ways.

18. The battery pack according to claim 15, wherein:
the electrical connection between the plurality of battery packs is made in parallel so that the storage capacity of the plurality of battery packs can be realized in various ways.

19. An energy storage system comprising the battery pack according to claim 1.
